# EUROPÄISCHE PATENTANMELDUNG

(11) **EP 1 990 571 A2**
(43) Veröffentlichungstag der Anmeldung: **12.11.2008**
(21) Anmeldenummer: 08006842.2
(22) Anmeldetag: 04.04.2008
(51) Int. Cl.: F16L 37/38

(54) **Steckkupplung und Stutzen für eine Steckkupplung**

(30) Priorität: 10.05.2007 DE 102007021853
(71) Anmelder: NORMA Germany GmbH, 63277 Maintal (DE); Careng automotive GmbH, 33449 Langenberg (DE)
(72) Erfinder: Bahner, Frank, 63071 Offenbach/Main (DE); Jacksteit, Bruno, 61130 Nidderau (DE); Bahlke, Matthias, 63571 Gelnhausen (DE); Strauss, Oliver, 61130 Nidderau (DE); Kramer, Dirk, 37176 Nörten-Hardenberg (DE); Cichorek, Hermann, 37434 Giebolderhausen (DE); Baier, Siegfried Kurt, 68766 Hockenheim (DE)
(74) Vertreter: Knoblauch, Andreas

(57) **Zusammenfassung**

Es wird eine Steckkupplung (1) zum Verbinden zweier Fluidleitungen angegeben mit einem ersten Element (2), das eine Einstecköffnung (4) aufweist, einem zweiten Element (3), das in die Einstecköffnung (4) einsteckbar ist und eine Halteeinrichtung (5) zum lösbaren Zusammenhalten der beiden Elemente 2, 3.

Man möchte eine Strömung durch die Steckkupplung beeinflussen können.

Hierzu ist vorgesehen, dass an einer in die Einstecköffnung (4) eingesteckten Stirnseite (8) des zweiten Elements (3) ein Ventil (9) angeordnet ist.

## Beschreibung

Die Erfindung betrifft eine Steckkupplung zum Verbinden zweier Fluidleitungen mit einem ersten Element, das eine Einstecköffnung aufweist, einem zweiten Element, das in die Einstecköffnung einsteckbar ist, und einer Halteeinrichtung zum lösbaren Zusammenhalten der beiden Elemente.

Eine derartige Steckkupplung ist beispielsweise aus DE 37 27 858 C2 bekannt. Die Halteeinrichtung weist dabei zwei Rastelemente auf, die über Arme mit dem zweiten Element verbunden sind. Das erste Element weist einen Vorsprung auf, hinter dem die Rastelemente einrasten können. Die beiden Arme sind durch einen Ring miteinander verbunden. Wenn dieser Ring zusammengedrückt wird, dann werden die Arme auseinander gebogen, so dass das zweite Element vom ersten Element gelöst werden kann. Eine derartige Steckkupplung kann für viele Anwendungszwecke verwendet werden. Als Fluide können Flüssigkeiten oder Gase durch einen Leitungsstrang geleitet werden, der mit der Steckkupplung versehen ist. In manchen Fällen möchte man eine Möglichkeit haben, den Strom des Fluids in der Steckkupplung zu beeinflussen.

Der Erfindung liegt die Aufgabe zugrunde, die Strömung durch die Steckkupplung zu beeinflussen.

Diese Aufgabe wird bei einer Steckkupplung der eingangs genannten Art dadurch gelöst, dass an einer in die Einstecköffnung eingesteckten Stirnseite des zweiten Elements ein Ventil angeordnet ist.

Mit dem Ventil lässt sich die Strömung des Fluids durch die Steckkupplung beeinflussen. Die Anordnung des Ventils an der Stirnseite des zweiten Elements hat zwei Vorteile. Das Ventil ist sozusagen an einem Ende eines Leitungsabschnitts angeordnet, der in dem zweiten Element endet. Bei einer gelösten Steckkupplung kann das Ventil beispielsweise verwendet werden, um den Leitungsstrang, der bis zum zweiten Element führt, abzuschließen. Die Anordnung des Ventils an der Stirnseite hat den weiteren Vorteil, dass man einen großen Teil des Bauraums, den man für das Ventil benötigt, außerhalb des freien Querschnitts der Leitung anordnen kann, so dass der Leitungsquerschnitt im Bereich der Steckkupplung nur in einem noch akzeptablen Maße verringert wird.

Vorzugsweise weist das Ventil ein Ventilelement und einen Korpus auf, der mit dem zweiten Teil verschweißt ist. Wenn man den Korpus des Ventils mit dem zweiten Element verschweißt, dann benötigt man zum Herstellen der Verbindung zwischen dem Korpus und dem zweiten Element praktisch keinen zusätzlichen Bauraum, so dass man die Größe der Kombination aus Ventil und zweitem Element klein halten kann. Das zweite Element mit Ventil kann praktisch genauso groß oder nur unwesentlich größer gehalten werden als ein zweites Element einer Steckkupplung ohne Ventil. Darüber hinaus kann man mit Hilfe einer Schweißverbindung gleichzeitig eine Dichtigkeit herstellen, so dass man keine zusätzlichen Maßnahmen treffen muss, um das Ventil gegenüber dem zweiten Element abzudichten.

Vorzugsweise weist der Korpus mindestens zwei Drehmomentangriffsflächen auf. Die Drehmomentangriffsflächen gestatten einem Werkzeug, am Korpus anzugreifen und ihn zu drehen. Wenn man diese Möglichkeit hat, dann kann man das Verschweißen des Korpus mit dem zweiten Element durch ein Reibungsschweißen vornehmen. Dies macht die Herstellung einer Kombination aus zweitem Element und Ventil relativ einfach, weil man von außen keine weiteren Werkzeuge an die Schweißnaht heranführen muss. Insbesondere dann, wenn sowohl der Korpus als auch das zweite Element aus einem Kunststoff gebildet sind, reicht die Wärme aus, die man durch Reibung erzeugen kann, um die zum Verschweißen notwendige Temperatur zu erzeugen.

Vorzugsweise weist das zweite Element im Bereich der Stirnseite eine Durchmessererweiterung auf. Durch die Durchmessererweiterung wird Platz geschaffen, um zumindest einen Teil des Korpus aufnehmen zu können. Man kann dadurch die Baugröße der Kombination aus Ventil und zweitem Element klein halten.

Hierbei ist besonders bevorzugt, dass das zweite Element im Bereich der Durchmessererweiterung eine verringerte Wandstärke aufweist. Da das Ventil, genauer gesagt sein Korpus, die Belastbarkeit des zweiten Elements im Bereich der Stirnseite erhöht, muss man diese Belastbarkeit nicht mehr durch eine entsprechend große Wandstärke des zweiten Elements sicherstellen, sondern man kann die Wandstärke verringern, so dass auch außerhalb einer Wand, die den durch das zweite Element geführten Kanal umgibt, ein Teil des Korpus untergebracht werden kann, ohne den Außendurchmesser des zweiten Elements hier zu vergrößern.

Vorzugsweise weist der Korpus eine umlaufende Nut auf, in die das zweite Element mit seiner Stirnseite eingreift. Der Korpus umgreift eine Zylinderwand des zweiten Elements, durch die ein Kanal verläuft, sozusagen radial von innen und von außen. Dies führt zu einer erhöhten mechanischen Stabilität.

Bevorzugterweise ist das Ventilelement mit Hilfe einer Steckverbindung mit dem Korpus verbunden. Eine Steckverbindung lässt sich leicht lösen. Das Ventilelement kann also auf einfache Weise ausgetauscht werden, wenn es nach einer gewissen Betriebszeit verschlissen ist oder Schäden zeigen sollte.

Besonders bevorzugt ist hierbei, dass das Ventilelement als Ventilplatte ausgebildet ist. Mit einer Ventilplatte lässt sich beispielsweise ein Rückschlagventil auf einfache Weise realisieren. Die Ventilplatte hat dabei eine gewisse Nachgiebigkeit und Verformbarkeit, so dass der Strom eines Fluids aus einer Richtung das Ventilelement unter Verformung der Ventilplatte von einem Ventilsitz abheben kann, in der anderen Strömungsrichtung das Ventilelement jedoch gegen den Ventilsitz drückt.

Bevorzugterweise weist der Korpus einen Haltenocken auf, auf den die Ventilplatte aufgesteckt ist. Zweckmäßigerweise wird der Haltenocken dabei einen umlaufenden Vorsprung aufweisen, den man beim Aufstecken der Ventilplatte überwinden muss, um die Ventilplatte mit dem Haltenocken zu verrasten.

In einer alternativen Ausgestaltung ist vorgesehen, dass die Ventilplatte einen Haltestift aufweist, der in den Korpus eingesteckt ist. Das Ventilelement ist also pilzartig ausgebildet, wobei der Fuß des Pilzes durch den Haltestift gebildet ist. Auch hier ist es zweckmäßig, den Haltestift mit einer Verdickung auszubilden, mit deren Hilfe er im Korpus verrastet werden kann.

Bevorzugterweise liegt die Ventilplatte unter einer Vorspannung an einem am Korpus ausgebildeten Ventilsitz an. Dies hat den Vorteil, dass das Ventil dann, wenn es nicht durch eine Strömung oder eine Druckdifferenz beaufschlagt ist, dicht schließen kann.

Vorzugsweise ist ein Niederhalter für das Ventilelement mit dem Korpus verrastet. Der Niederhalter verhindert, dass sich das Ventilelement zu weit vom Ventilsitz entfernt, wenn es die Durchströmung durch das zweite Element frei gibt. Wenn man den Niederhalter mit dem Korpus verrastet, dann hat dies zum Einen den Vorteil einer leichten Montage. Der Niederhalter wird einfach auf den Korpus aufgedrückt, nachdem das Ventilelement montiert ist. Im Fehlerfall ist es genauso einfach möglich, den Niederhalter vom Korpus zu lösen, um das Ventilelement austauschen zu können.

Hierbei ist bevorzugt, dass der Niederhalter mehrere sternförmig angeordnete Arme aufweist und der Korpus Vorsprünge aufweist, die zwischen den Stegen angeordnet sind. Zwischen den Vorsprüngen und den Stegen verbleibt ein freier Raum, in den ein Werkzeug eingreifen kann, um den Korpus gegenüber dem zweiten Element zu drehen, wodurch die Reib-Schweißverbindung erzeugt wird. Man kann dann das Ventil mit Ventilelement und Niederhalter vormontieren und das vormontierte Ventil dann mit dem zweiten Element verschweißen.

Die Erfindung betrifft auch einen Stutzen für einen Steckkupplung, die als zweites Element der oben beschriebenen Steckkupplung ausgebildet ist.

Die Erfindung wird im Folgenden anhand von bevorzugten Ausführungsbeispielen in Verbindung mit einer Zeichnung beschrieben. Hierin zeigen:
- Fig. 1: eine erste Ausführungsform einer Steckkupplung,
- Fig. 2: eine vergrößerte Darstellung eines Ventils,
- Fig. 3: das Ventil aus Figur 2 in perspektivischer Darstellung,
- Fig. 4: eine zweite Ausführungsform einer Steckkupplung.

Eine Steckkupplung 1 weist ein erstes Element 2 und ein zweites Element 3 auf. Beide Elemente 2, 3 können auf nicht näher dargestellte Weise mit Fluidleitungen verbunden werden, wobei für die Zwecke der hier vorliegenden Beschreibung eine Fluidleitung auch durch einen Behälter gebildet sein kann.

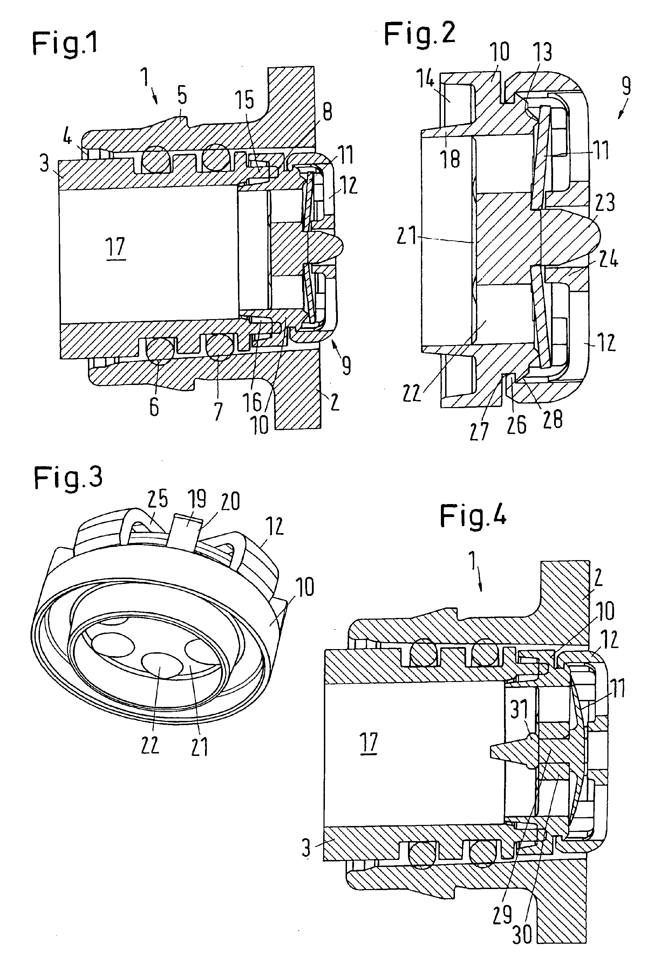

Das erste Element 2 weist eine Einstecköffnung 4 auf, in die das zweite Element eingesteckt ist. Das erste Element 2 weist einen umlaufenden Vorsprung 5 auf, der Teil einer Halteeinrichtung ist. Hinter den Vorsprung 5 kann eine Rastnase einrasten, die mit dem zweiten Element 3 verbunden ist. Für weitere Einzelheiten hierzu wird auf DE 37 27 858 C2 verwiesen. Die Rastnase ist in der Schnittansicht der Figur 1 nicht vorhanden.

Zwei Dichtringe 6, 7 sorgen für eine fluiddichte Verbindung zwischen den beiden Elementen 2, 3.

Das zweite Element 3 ist an seiner Stirnseite 8 mit einem Ventil 9 versehen. Das Ventil 9 weist einen Korpus 7, ein Ventilelement 11 und einen Niederhalter 12 auf. Das Ventilelement 11 liegt unter einer gewissen Vorspannung an einem Ventilsitz 13 an, der am Korpus 10 ausgebildet ist.

Der Korpus 10 weist an seiner dem zweiten Element 3 zugewandten Ende eine umlaufende Nut 14 auf, die eine Zylinderwand 15 radial innen und radial außen umgreift. Die Zylinderwand 15 bildet das stirnseitige Ende des zweiten Elements 3. Sie weist gegenüber dem anderen Ende des zweiten Elements 3 eine verringerte Wandstärke auf. Darüber hinaus umschließt sie eine Durchmesservergrößerung 16 eines durch das zweite Element 3 verlaufenden Kanals 17, in die ein Teil 18 des Korpus 10 des Ventils 9 hinein ragt.

Der Korpus weist an seinem dem zweiten Element 3 abgewandten Ende mehrere Vorsprünge 19 auf, von denen jeder eine Drehmomentangriffsfläche bildet, an der ein nicht näher dargestelltes Werkzeug angreifen kann, um den Korpus 10 gegenüber dem zweiten Element 3 zu verdrehen, wenn der Korpus 10 am zweiten Element 3 anliegt. Sowohl der Korpus 10 als auch das zweite Ventilelement 3 sind aus einem Kunststoff gebildet. Durch das Verdrehen der beiden Teile relativ zueinander wird Reibungswärme erzeugt, die wiederum eine Temperatur erzeugt, die ausreicht, um den Korpus 10 mit dem zweiten Element 3 durch Reibungsschweißen miteinander zu verbinden.

Der Korpus 10 des Ventils 9 weist eine den Kanal 17 abdeckende Wand 21 auf, in der mehrere Öffnungen 22 vorgesehen sind, die dann, wenn das Ventilelement 11 vom Ventilsitz 13 abgehoben ist, einen Durchgang von Fluid durch den Kanal 17 gestatten. Ein derartiges Abheben wird beispielsweise dadurch ermöglicht, dass Fluid so durch den Kanal 17 strömt, dass es von der ventilsitzseitigen Seite auf das Ventilelement 11 wirkt. Wenn hingegen im Kanal 17 ein geringerer Druck als außerhalb herrscht, dann wird das Ventilelement 11 auf den Ventilsitz 13 gedrückt und das Ventil 9, das hier als Rückschlagventil ausgebildet ist, bleibt geschlossen.

Das Ventilelement 11 ist als Ventilplatte ausgebildet, die auf einen Haltenocken 23 aufgeschoben ist. Der Haltenocken 23 ist einstückig mit dem Korpus 10 verbunden. Er steht von der Wand 21 vor.

Der Niederhalter 12 weist eine Ringwand 24 auf, die den Haltenocken 23 umgibt, und dafür sorgt, dass das Ventilelement 11 nicht vom Haltenocken 23 abgehoben werden kann. Der Niederhalter 12 weist mehrere Arme 25 auf, die von der Ringwand 24 sternförmig ausgehen. Jeder Arm 25 trägt an seinem radial äußeren Ende einen Haken 26, mit dem er in eine Nut 27 einrastet, die am Korpus 10 ausgebildet ist. Um das Einrasten zu erleichtern, kann der Korpus 10 vor der Nut 27 eine Schrägfläche 28 aufweisen. Wenn der Niederhalter 12 auf den Korpus aufgedrückt wird, dann kommen die Haken 26 zunächst in Anlage an der Schrägfläche 28 und werden durch die Schrägfläche 28 aufgespreizt und rasten dann in die Nut 27 ein. Um den Niederhalter 12 vom Korpus 10 zu entfernen, ist es lediglich erforderlich, die Haken 26 an den Armen 25 etwas aufzuspreizen. Sobald die Haken 26 aus der Nut 27 frei kommen, lässt sich der Niederhalter 12 vom Korpus 10 abheben und das Ventilelement 11 kann ausgetauscht werden.

Wie insbesondere aus Fig. 1 zu erkennen ist, wird durch das Ventil 9 der freie Querschnitt des Kanals 12 praktisch nur durch die Öffnungen 22 gedrosselt. Im Übrigen bleibt der Querschnitt des Kanals 17 fast vollständig erhalten. Größere Einbauten sind nicht erforderlich, die den Querschnitt des Kanals 17 verengen könnten.

Fig. 4 zeigt eine abgewandelte Ausgestaltung einer Steckkupplung 1, bei der gleiche Elemente wie in Figuren 1 bis 3 mit den gleichen Bezugszeichen versehen sind.

Der Hauptunterschied liegt hier im Ventilelement 11, das als "Pilz" ausgebildet ist. Das Ventilelement 11 weist einen Fuß 29 auf, der durch ein Mittelstück 30 des Korpus 10 geführt ist. An dem durch das Mittelstück 30 geführten Ende des Fußes 29 ist eine Verdickung 31 vorgesehen. Das Ventilelement 11 einschließlich Fuß 29 ist aus einem elastisch komprimierbaren Material gebildet. Man kann nun ohne weiteres die Verdickung durch das Mittelstück 30 hindurch drücken. Danach dehnt sich die Verdickung 31 wieder auf, so dass das Ventilelement 11 im Mittelstück 30 des Korpus 10 gehalten ist.

## Patentansprüche

1. Steckkupplung zum Verbinden zweier Fluidleitungen mit einem ersten Element, das eine Einstecköffnung aufweist, einem zweiten Element, das in die Einstecköffnung einsteckbar ist und einer Halteeinrichtung zum lösbaren Zusammenhalten der beiden Elemente, **dadurch gekennzeichnet, dass** an einer in die Einstecköffnung (4) eingesteckten Stirnseite (8) des zweiten Elements (3) ein Ventil (9) angeordnet ist.

2. Steckkupplung nach Anspruch 1, **dadurch gekennzeichnet, dass** das Ventil (9) ein Ventilelement (11) und einen Korpus (10) aufweist, der mit dem zweiten Element (3) verschweißt ist.

3. Steckkupplung nach Anspruch 2, **dadurch gekennzeichnet, dass** der Korpus (10) mindestens zwei Drehmomentangriffsflächen (20) aufweist.

4. Steckkupplung nach Anspruch 2 oder 3, **dadurch gekennzeichnet, dass** das zweite Element (3) im Bereich der Stirnseite (8) eine Durchmessererweiterung (16) aufweist.

5. Steckkupplung nach Anspruch 4, **dadurch gekennzeichnet, dass** das zweite Element (3) im Bereich der Durchmessererweiterung (16) eine verringerte Wandstärke aufweist.

6. Steckkupplung nach einem der Ansprüche 2 bis 5, **dadurch gekennzeichnet, dass** der Korpus (10) eine umlaufende Nut (14) aufweist, in die das zweite Element (3) mit seiner Stirnseite (8) eingreift.

7. Steckkupplung nach einem der Ansprüche 2 bis 6 **dadurch gekennzeichnet, dass** das Ventilelement (11) mit Hilfe einer Steckverbindung mit dem Korpus (10) verbunden ist.

8. Steckkupplung nach einem der Ansprüche 2 bis 7, **dadurch gekennzeichnet, dass** das Ventilelement (11) als Ventilplatte ausgebildet ist.

9. Steckkupplung nach Anspruch 8, **dadurch gekennzeichnet, dass** der Korpus (10) einen Haltenocken (23) aufweist, auf die die Ventilplatte aufgesteckt ist.

10. Steckkupplung nach Anspruch 8, **dadurch gekennzeichnet, dass** die Ventilplatte einen Haltestift (29) aufweist, der in den Korpus (10) eingesteckt ist.

11. Steckkupplung nach einem der Ansprüche 8 bis 9, **dadurch gekennzeichnet, dass** die Ventilplatte unter einer Vorspannung an einem am Korpus (10) ausgebildeten Ventilsitz (13) anliegt.

12. Steckkupplung nach einem der Ansprüche 2 bis 11, **dadurch gekennzeichnet, dass** ein Niederhalter (12) für das Ventilelement (11) mit dem Korpus (10) verrastet ist.

13. Steckkupplung nach Anspruch 12, **dadurch gekennzeichnet, dass** der Niederhalter (12) mehrere sternförmig angeordnete Arme (25) aufweist und der Korpus (10) Vorsprünge (19) aufweist, die zwischen den Armen (25) angeordnet sind.

14. Stutzen für eine Steckkupplung, **dadurch gekennzeichnet, dass** die als zweites Element (3) der Steckkupplung (1) nach einem der Ansprüche 1 bis 13 ausgebildet ist.
